# EUROPÄISCHE PATENTANMELDUNG

(11) **EP 0 738 060 A2**
(43) Veröffentlichungstag der Anmeldung: **16.10.1996**
(21) Anmeldenummer: 96104838.6
(22) Anmeldetag: 27.03.1996
(51) Int. Cl.: H04L 12/28, H04L 12/64

(54) **Lokales Netz für den Einsatz in der Bürokommunikation und Schaltungsanordnung dafür**

(30) Priorität: 13.04.1995 DE 19514043
(71) Anmelder: Alcatel SEL Aktiengesellschaft, D-70435 Stuttgart (DE)
(72) Erfinder: Metz, Manfred, 71254 Ditzingen (DE); Siegmund, Gerd, 70435 Stuttgart (DE)
(74) Vertreter: Müller, Joachim, Dipl.-Ing.

(57) **Zusammenfassung**

Üblicherweise werden LAN für die reine Datenkommunikation eingesetzt. Eine Sprachübertragung über ein LAN ist nur mit der Einschränkung möglich, daß während der relativ langen Belegungsdauer für weitere Teilnehmer lange Wartezeiten auftreten. Mit der Erfindung wird die Aufgabe gelöst, die Funktionalität der an einem LAN angeschlossenen Workstations unter Ausnutzung der ATM-Technologie für den Kommunikationsbedarf in einer Büroumgebung zu erweitern. Dazu wird ein Netzknoten oder jeweils eine herkömmliche Workstation (3) mit einer Baugruppe mit vermittlungstechnischer Funktion ergänzt, so daß dann über Schnittstellenschaltungen (41, 51, 61, 71) Endgeräte unterschiedlichster Art (4, 5, 6, 7) Zugriff zu dem LAN haben und in der Wirkung ein Privatnetz mit verteilten Telekommunikationsanlagen entsteht. Somit werden Echtzeitverbindungen mit unterschiedlichem Bandbreitebedarf, wie beispielsweise Videokonferenzen und reine Sprachübertragung möglich. Das so erweiterte ATM-LAN ist für alle Kommunikationsarten, die in einem Büro auftreten, geeignet.

## Beschreibung

Die Erfindung betrifft den erweiterten Einsatz eines lokalen Netzes, kurz LAN, englisch Local Area Network, in einer Büroumgebung. Üblicherweise ist ein LAN ein geographisch begrenztes Datenkommunikationsnetz für mehrere unabhängige Geräte, beispielsweise Workstations. Bei einem herkömmlichen LAN kann zu einem bestimmten Zeitpunkt nur ein einziger Teilnehmer über eine Workstation die Übertragungsstrecke für den Datentransport von einer Workstation zu einer anderen nutzen.

Bei der durchaus üblichen großen Anzahl angeschlossener Workstations steht damit einer einzelnen Workstation im Mittel nur ein geringer Anteil der gesamten Übertragungskapazität zur Verfügung. Dieser Nachteil wurde durch immer höhere Übertragungsgeschwindigkeiten, soweit technologisch und ökonomisch vertretbar, kompensiert. Zudem bieten die Zugriffsverfahren in einem LAN nur eine eingeschränkte Unterstützung für Echtzeitdienste. So ist eine Sprachübertragung über ein LAN nur mit der Einschränkung möglich, daß während der relativ langen Belegungsdauer des für alle Teilnehmer gemeinsamen Übertragungsmediums durch die Sprachübertragung eine Belegung durch weitere Teilnehmer unmöglich ist und somit für diese lange Wartezeiten entstehen.

Es ist bekannt, die Leistungsfähigkeit eines LAN wesentlich zu verbessern, wenn zur Vermittlung von Informationen der asynchrone Transfermodus, kurz ATM, verwendet wird, vgl. G. Siegmund: ATM in lokalen Netzen, Nachrichtentechnik, Elektronik, Berlin 44 (1994), Heft 5, Seite 69 bis 72.

Die ATM-LAN-Strukturen basieren auf Anordnungen, in denen die Workstations sternförmig an einen zentralen oder auch an mehrere dezentrale Netzknoten herangeführt werden. Innerhalb der Netzknoten werden alle Verbindungen über ein Koppelfeld vermittelt. Das Koppelfeld im Netzknoten ermöglicht die Schaltung mehrerer gleichzeitiger Verbindungen, indem die ATM-Zellen verschiedener Verbindungen parallel vom Netzknoten bearbeitet werden. Obwohl die gleichzeitige Aufrechterhaltung von interaktiven Verbindungen, beispielsweise zur Textbearbeitung, und von Echtzeitverbindungen, beispielsweise für eine Videokonferenz, in einem ATM-LAN ohne eine gegenseitige Einschränkung möglich ist, besteht dennoch der Wunsch, die Einsatzmöglichkeiten eines ATM-LAN zu vergrößern. Daraus resultiert die Aufgabe der Erfindung, die Funktionalität der an einem LAN angeschlossenen Workstations bei Ausnutzung der Vorteile des ATM zu erweitern, um den Kommunikationsbedarf, wie er beispielsweise in einer Büroumgebung auftritt, zu befriedigen.

Diese Aufgabe wird durch das im ersten Patentanspruch beschriebene lokale Netz und durch die im dritten Patentanspruch beschriebene Schaltungsanordnung gelöst.

Das Wesen der Erfindung besteht darin, daß die zu einem LAN gehörenden Workstations jeweils um eine einfach aufgebaute und kostengünstige Baugruppe mit vermittlungstechnischer Funktion ergänzt werden. Diese so ergänzten Workstations wirken wie eine kleine Nebenstellenanlage, über die Endgeräte unterschiedlicher Art, wie sie für die Kommunikation in einem Büro erforderlich sind, angeschlossen werden können. Weiterhin ist es möglich, die Baugruppe mit vermittlungstechnischer Funktion zentral in einem Netzknoten anzuordnen und die Schnittstellenschaltungen für die Endgeräte in den Workstations zu belassen.

Die Erfindung wird nachstehend an einem Ausführungsbeispiel erläutert. In der dazugehörigen Zeichnung zeigen
- Fig. 1: eine Darstellung eines ATM-LAN für den erfindungsgemäßen Einsatz in einer Büroumgebung,
- Fig. 2: eine Workstation mit zugeordneten drahtgebundenen Endgeräten und schnurlosen Telefonen,
- Fig. 3: ein Schaltbild der erfindungsgemäßen Schaltungsanordnung,
- Fig. 4: eine Darstellung des Funktionsablaufs für eine interne Verbindung und
- Fig. 5: eine Darstellung des Funktionsablaufs für eine Verbindung von Endgeräten zweier Workstations.

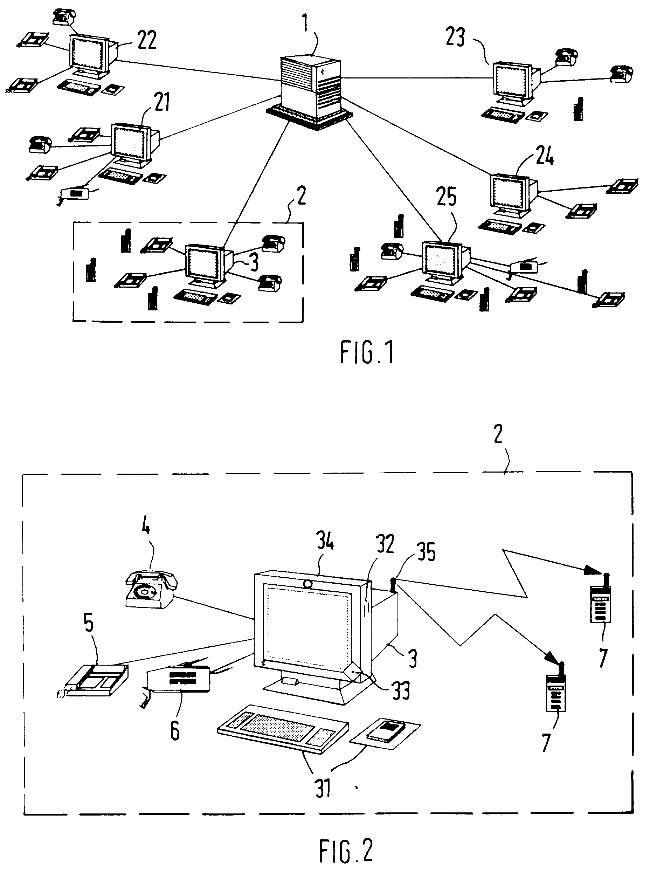

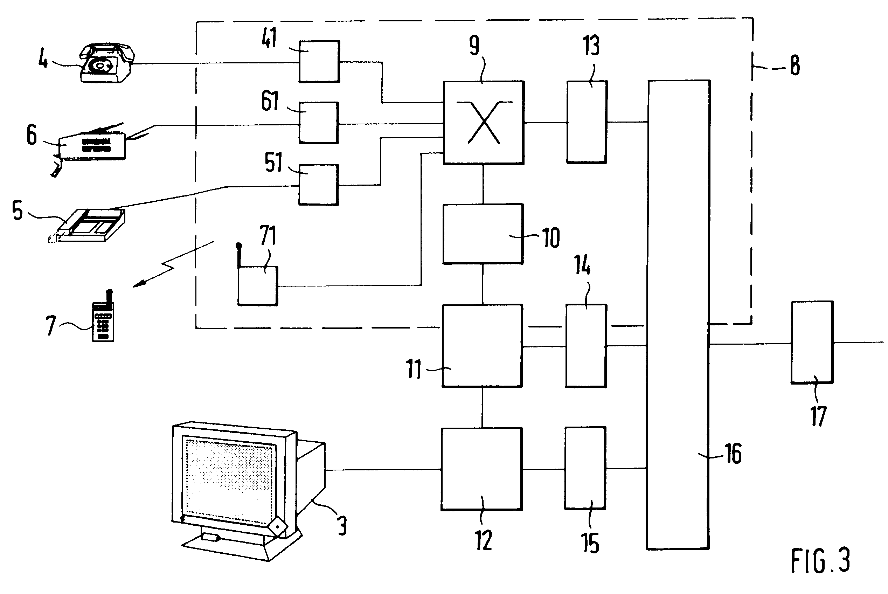

Gemäß Fig. 1 besteht ein ATM-LAN aus einem Netzknoten 1, an den sternförmig eine Anzahl Workstations 2, 21, 22, 23, 24, 25 über Kupferdoppeladern oder Lichtwellenleiter angeschlossen sind. Der Netzknoten 1 enthält ein zentrales ATM-Vermittlungselement und erfüllt außerdem die Funktion eines Diensterbringers, eines sogenannten Servers. Fig. 2 zeigt am Beispiel der Workstation 2 die erfindungsgemäße Erweiterung der Funktionen eines ATM-LAN für den Kommunikationsbedarf in einer Büroumgebung. Die aus dem Stand der Technik bekannte Workstation 3 mit den Bedienelementen 31, einer Tastatur und einer Maus, mit einem Lautsprecher 32, einem Mikrophon 33, einer Videokamera 34, ist erfindungsgemäß um eine in Fig. 3 dargestellte Baugruppe mit vermittlungstechnischer Funktion 8 erweitert, die in Fig. 2 durch eine Antenne 35 angedeutet ist und die Verbindungen zu einem einfachen Telefon 4, das möglicherweise in analoger Schaltungstechnik ausgeführt ist, zu einem Komforttelefon 5 in digitaler Schaltungstechnik, zu einem Fernkopierer 6 und über eine Funkstrecke zu einem DECT-Telefon 7 ermöglicht.

Die Schaltungsanordnung der Baugruppe mit vermittlungstechnischen Funktionen 8 ist in Fig. 3 dargestellt. Danach besteht diese Baugruppe 8 aus einem Koppelfeld 9, an das über Schnittstellenschaltungen die Endgeräte Zugriff haben, nämlich über eine erste Schnittstellenschaltung 41 das einfache Telefon 4, über eine zweite Schnittstellenschaltung 51, das Komforttelefon 5, über eine dritte Schnittstellenschaltung 61 der Fernkopierer 6 und über eine Basisstation 71 das DECT-Telefon 7. Eine Signalisierungsbaugruppe 11, die über eine erste Steuerschaltung 12 die Workstation 3 steuert, wird funktionell auch für die Steuerung des Koppelfeldes 9 über eine zweite Steuerschaltung 10 verwendet. Zur Realisierung der Informationsübertragung mit der ATM-Technologie ist eine Protokollstruktur von der ITU-T definiert worden, die mit einer ATM-Adaptionsschicht, kurz AAL, engl. ATM Adaption Layer, mit einer ATM-Schicht und mit einer physikalischen Schicht beschrieben wird, vgl. dazu G. Siegmund: ATM-Die Technik des Breitband-ISDN. R.V. Decker's Verlag, G. Schenck, Heidelberg 1993, Seiten 40-66. In Fig. 3 sind entsprechend der unterschiedlichen Funktionen jeweils unterschiedliche Diensttypen der ATM-Adaptionsschichten 13, 14, 15 angegeben, die aus den digitalen Anwenderdaten ATM-Zellen bilden, die wiederum in der ATM-Schicht 16 weiterverarbeitet werden. Die physikalische Schicht 17 transportiert die ATM-Zellen und liefert der ATM-Schicht 16 die für die Bearbeitung der ATM-Zellen benötigte Zeitinformation. Ferner ist diese Schicht zuständig für das Einfügen, bzw. Entfernen von Leerzellen. Das Koppelfeld 9 ist über eine ATM-Adaptionsschicht Typ 1 13, die Signalisierungsbaugruppe 11 ist über eine ATM-Adaptionsschicht Typ 5 14 und die erste Steuerschaltung 12 ist über eine ATM-Adaptionsschicht Typ 3/4 15 mit der ATM-Schicht 16 verbunden.

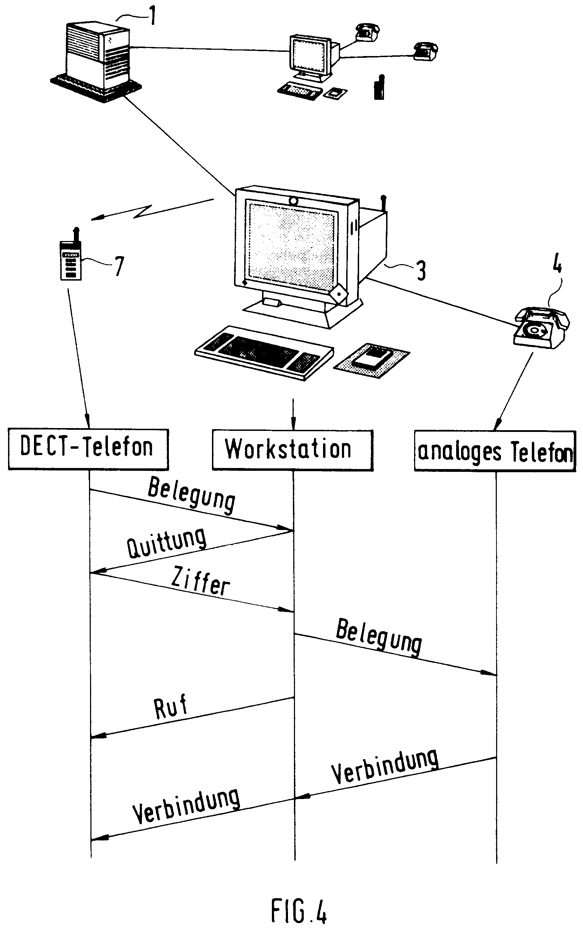

In Fig. 4 ist eine Anwendungsmöglichkeit der mit der Baugruppe mit vermittlungstechnischer Funktion 8 ausgerüsteten Workstation 3 dargestellt. Durch die in der Workstation 3 integrierten Vermittlungsfunktion können Gesprächsverbindungen lokal von dem DECT-Telefon 7 zu beispielsweise dem drahtgebundenen Telefon 4 vermittelt werden. Ebenso kann die Verbindung in umgekehrter Richtung von dem drahtgebundenen Telefon 4 zu dem DECT-Telefon 7 aufgebaut werden.

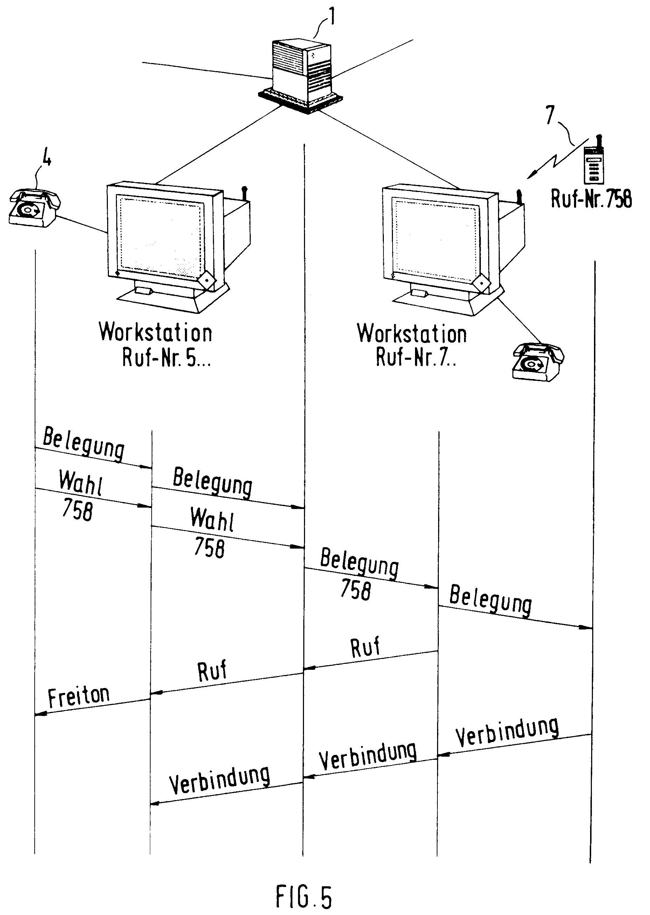

Fig. 5 zeigt den Verbindungsaufbau von einem drahtgebundenen Telefon 4, das zu einer Workstation mit dem Rufnummernbereich 5.. gehört, zu einem DECT-Telefon 7, das zu einer Workstation mit dem Rufnummernbereich 7.. gehört. Je nach Größe und Art des privaten Netzes können entsprechende Rufnummernbereiche den einzelnen Workstations zugeordnet werden, so daß ein Privatnetz mit verteilten Telekommunikationsanlagen entsteht.

Durch die Erweiterung der Workstation mit einer Baugruppe mit vermittlungstechnischen Funktionen wird vorteilhafterweise die Trennung zwischen reiner Datenkommunikation, wie sie bei üblichen LAN typisch ist, und reiner Sprachkommunikation, wie sie aus üblichen Telekommunikationsanlagen bekannt ist, aufgehoben. Ein ATM-LAN kann somit für den Bedarf einer Bürokommunikation um weitere Endgeräteschnittstellenschaltungen erweitert werden. Echtzeitverbindungen mit unterschiedlichem Bandbreitebedarf, wie beispielsweise Videokonferenzen und reine Sprachübertragung, können durch die ATM-Technologie ohne gegenseitige Einschränkungen gleichzeitig unterhalten werden. Jede Verbindung fordert die jeweils notwendige Übermittlungsbandbreite beim Aufbau der Verbindung an. Das erfindungsgemäß erweiterte ATM-LAN ist für alle Kommunikationsarten, die in einem Büro auftreten können, geeignet, beispielsweise für die Sprachkommunikation, für den Fernkopierdienst, für Videokonferenzen, für die Sprachspeicherung und für die Einbindung dieser Kommunikationsarten in Dokumente und Archiv-Dateien. So kann beispielsweise ein Dokument zusammen mit dem dieses Dokument erläuternden Text in einem Server abgespeichert werden. Durch die gemeinsame Verarbeitungsmöglichkeit von Sprache, Text, Bild, Grafik und Video mit einer Workstation entsteht ein universell einsetzbares Multimedia-Endgerät in einem ATM-LAN.

## Patentansprüche

1. Lokales Netz aus mindestens einem Netzknoten und aus einer Vielzahl von Workstations für den Einsatz in einer Umgebung mit unterschiedlichem Kommunikationsbedarf unter Anwendung des asynchronen Transfermodus,
**dadurch gekennzeichnet,** daß dem jeweiligen Netzknoten (1) und/oder jeder Workstation (2, 21, 22, 23, 24, 25) eine Baugruppe (8) mit vermittlungstechnischer Funktion zugeordnet ist, auf die über entsprechende Schnittstellenschaltungen (41, 51, 61, 71) drahtgebundene Endgeräte (4, 5, 6) und schnurlose Endgeräte (7) Zugriff haben und daß zum Informationsaustausch bedarfsweise Verbindungen hergestellt werden
- von einem schnurlosen Endgerät (7) über die dem jeweiligen Netzknoten (1) und/oder der Workstation zugeordneten Baugruppe (8) mit vermittlungstechnischer Funktion zu einem drahtgebundenen Endgerät (4, 5, 6),
- von einem drahtgebundenen Endgerät (4, 5, 6) über die dem jeweiligen Netzknoten und/oder der Workstation zugeordneten Baugruppe (8) mit vermittlungstechnischer Funktion zu einem schnurlosen Endgerät (7),
- zwischen einem einer ersten Workstation zugeordneten, drahtgebundenen oder schnurlosen Endgerät über die der ersten Workstation zugeordnete Baugruppe (8) mit vermittlungstechnischer Funktion und über den Netzknoten (1) sowie über eine einer weiteren Workstation zugeordnete Baugruppe (8) mit vermittlungstechnischer Funktion und einem dieser weiteren Workstation zugeordneten drahtgebundenen oder schnurlosen Endgerät
oder zwischen einem einer ersten Workstation zugeordneten drahtgebundenen oder schnurlosen Endgerät über die dem Netzknoten (1) zugeordnete Baugruppe (8) mit vermittlungstechnischer Funktion sowie über eine weitere Workstation und einem dieser Workstation zugeordneten drahtgebundenen oder schnurlosen Endgerät.

2. Lokales Netz nach Anspruch 1, dadurch gekennzeichnet, daß als schnurlose Endgeräte nach dem DECT-Standard arbeitende schnurlose Telefone, kurz DECT-Telefone, und daß als drahtgebundene Endgeräte Telefone einfacher Bauart in analoger Schaltungstechnik Komforttelefone, Fernkopierer, ISDN-Telefone, Bildtelefone und Datenverarbeitungsgeräte, wie beispielsweise Personalcomputer eingesetzt werden.

3. Schaltungsanordnung für das lokale Netz gemäß Anspruch 1, dadurch gekennzeichnet, daß jede Workstation (3) mit einer Baugruppe (8) mit vermittlungstechnischer Funktion derart ergänzt wird, daß eine in der Workstation (3) vorhandene Signalisierungsschaltung (11) über eine Steuerschaltung (10) mit einem Koppelnetz (9) verbunden ist, an das die Schnittstellenschaltungen (41, 51, 61) für drahtgebundene Endgeräte (4, 5, 6) und eine Basisstation (71) für den Zugriff auf schnurlose Endgeräte (7) geschaltet sind und daß das Koppelnetz (9) und die Signalisierungsschaltung (11) über jeweilige Schaltungsanordnungen (13, 14), die die Protokolle der ATM-Adaptionsschichten realisieren, mit einer Schaltungsanordnung (16), die das Protokoll der ATM-Schicht realisiert und die ATM-Übertragung unterstützt, verbunden ist.
